# EUROPEAN PATENT APPLICATION

(11) **EP 2 442 004 A1**
(43) Date of publication of application: **18.04.2012**
(21) Application number: 09845675.9
(22) Date of filing: 28.08.2009
(51) Int. Cl.: F21L 4/08, F21L 4/02

(54) **LED MULTIFUCTIONAL RECHARGEABLE ENERGY CONSERVATION LAMP**

(30) Priority: 11.06.2009 CN 200920132723 U
(71) Applicant: Lam, Shun yee, Guangdong 518000 (CN)
(72) Inventor: Lam, Shun yee, Guangdong 518000 (CN)
(74) Representative: Gulde Hengelhaupt Ziebig & Schneider
(86) International application number: PCT/CN2009/000986
(87) International publication number: WO 2010/142066

(57) **Abstract**

This Utility Model relates to a type of Rechargeable, Energy-Saving and Multifunctional LED Lamp. The lamps currently available in the market are always embarrassed by the single-purpose use, low degree of portability and other inconveniences in use. This utility model consists of the lamp holder, retractable link rod, housing, shade, LED bead, fixer, PCB and lithium battery. In the structure, the retractable link rod is disposed between the lamp holder and the housing, and the LED beads and fixer on the top of the housing. On the surface of the housing top is the lamp shade, at its side are the power switch and indicator and inside it is the PCB. The lithium battery is embedded in the retractable link rod, and on the PCB are AC-DC Constant-V power module, charging module, DC-DC Constant-I power module and intelligent module.

With high portability, this Utility Model can integrate the functions of floodlight, flashlight and fluorescent emergency lamp, and provide such benefits as safety, environment-friendly operation, energy-saving, long service life and easy promotion. The application locations of the product include stores, hotels, showrooms, emporiums, offices, warehouses, public places and residential houses.

## Description

### Technical Field

This utility model relates to the field of electronic illumination devices, specifically to a Rechargeable, Energy-Saving and Multifunctional LED Lamp.

### Background Art

Various lamps are sold in today's market. However, most of them, like the floodlight, flashlight and fluorescent emergency lamp, can only be used for single purpose. Such lamps may have different disadvantages, including inconvenience in use and portability, high costs incurred when different types of lamps are used together and maintenance work involving different manufacturers. On the other hand, the incandescent and regular CFL fluorescent lamps also fall into the category of traditional lamps. The incandescent lamps are almost washed out because of their low efficiency, excessively generated heat, short service life and other shortcomings. Although the performances of CFL fluorescent lamps are improved when compared to incandescent units, they also suffer from such disadvantages as high consumption of power, low luminous efficiency, as they generate light energy while the fluorescent powder is being stricken with high pressure. Besides, the fluorescent powder of the same point will become attenuated or even damaged if it is stricken for a long time. The mercury inside the tube may pose harm to the environment. All these factors greatly shorten the service time of the product. Fluorescent units also generate too much heat that makes the lamp surface hot. The ultraviolet and infrared in the spectrum will do harm to human body. The glass of the lamp tube are apt to be damaged and of poor durability. The rough appearance might affect the illumination effects.

### Contents of the utility model

The design of this utility model is aimed at producing a novel and easily operated LED Rechargeable Energy-Saving Lamp with high portability, which can integrate the functions of floodlight, flashlight and fluorescent emergency lamp, and provide such benefits as safety, environment-friendly operation, energy-saving, long service life and easy promotion.

This utility model consists of the lamp holder, retractable link rod, housing, shade, LED bead, fixer, PCB and lithium battery. In the structure, the retractable link rod is disposed between the lamp holder and the housing, and the LED beads and fixer on the top of the housing. A number of LED beads may be used. On the surface of the housing top is the lamp shade, at its side are the power switch and indicator and inside it is the PCB. The lithium battery is embedded in the retractable link rod, and on the PCB are AC-DC Constant-V power module, charging module, DC-DC Constant-I power module and intelligent module.

As LED is employed for illumination, the lamp can provide such benefits as environment friendly operation, energy saving and long service life. The lamp is configured with PC housing which can be pulled out, and the lithium battery which can provide power to keep LED lamp illuminating at the time of power failure in emergency cases. The switch on the housing is used to turn on or off the lamp, and can turn the lamp into an LED flashlight. The inner mechanism with constant voltage and current ensures the stability of LED beads. The intelligent module can control the aforesaid functions in smart way. The PC lamp shade on the housing helps achieve even, comfortable and non-glaring illumination, eliminating problem of dizziness and benefiting human health.

Integrating the functions of floodlight, flashlight and fluorescent emergency lamp, this utility model can offer such benefits as sophisticated design, easy operation, high portability, safe and environment friendly running, energy saving and long service life. It can be used in various places, including stores, hotels, showrooms, emporiums, offices, warehouses, public places and residential houses. This lamp can replace the CFL fluorescent lamp and its application can be easily promoted.

### Description of Figures

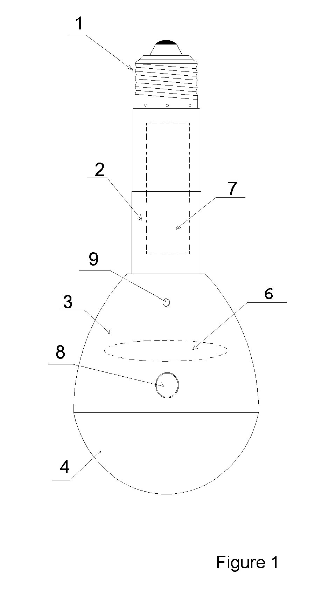

Figure 1 is the Overall Structure Diagram of this utility model;

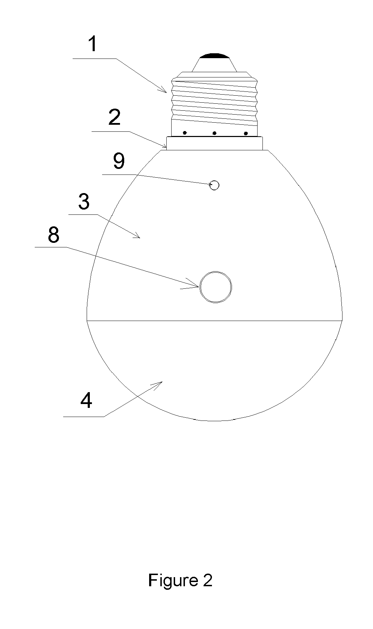

Figure 2 is the Structure Diagram of Retractable Link Rod's Retracted State for this Utility Model;

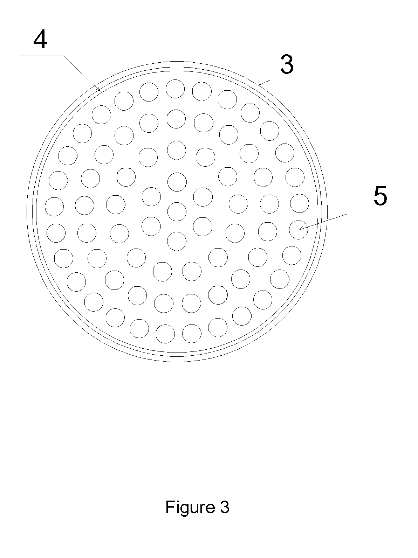

Figure 3 is the Structure Diagram of Housing, Shade, LED Beads and Fixer for this Utility Model;

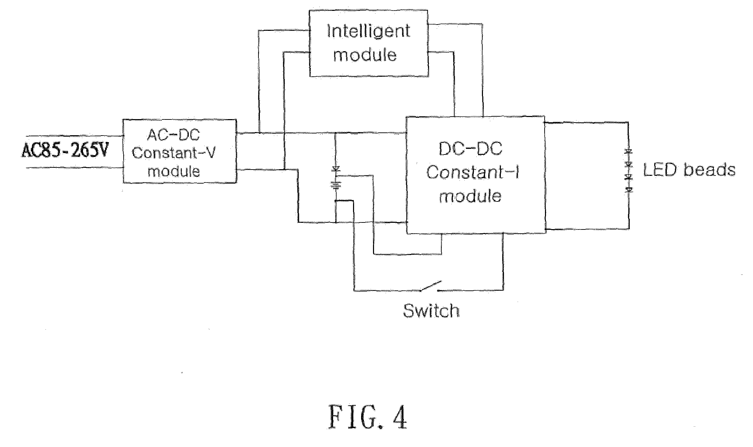

Figure 4 is the Circuit Diagram of this utility model;

### Descriptions of the parts in the diagrams:

| Part No. | Name |
|---|---|
| 1 | Lamp holder |
| 2 | Retractable link rod |
| 3 | Housing |
| 4 | Shade |
| 5 | LED bead and fixer |
| 6 | PCB |
| 7 | Lithium battery |
| 8 | Power switch |
| 9 | Indicator |

### Mode of Carrying out the Invention

Further details of this utility model in preferential application are provided below together with attached figures.

This Utility Model is made up of: lamp holder (1), retractable link rod (2), housing (3), shade (4), LED bead and fixer (5), PCB (6) and lithium battery (7). In the structure, the retractable link rod (2) is disposed between the lamp holder (1) and the housing (3), and the LED bead and fixer (5) on the top of the housing (3). A number of LED beads may be used. On the surface of the housing (3) top is the lamp shade (4), at its side are the power switch (8) and indicator (9) and inside it is the PCB (6). The lithium battery (7) is embedded in the retractable link rod (2), and on the PCB (6) are AC-DC Constant-V power module, charging module, DC-DC Constant-I power module and intelligent module.

When the commercial power is available, the commercial power input at the wide range AC85 - 265V is converted to DC voltage by the electronic AC-DC Constant-V module, and then the converted DC power is transmitted to LED beads through the electronic DC-DC Constant-I module. In this way, the electrical energy is smoothly converted into optical energy, which allows the LED beads to produce soft and pollution free rays. In case of power interruption, the intelligent module will make related judgment, and the power-supplying line will be switched to that of the lithium battery. The lithium battery only with the low DC voltage will provide the LED beads the constant current through the electronic DC-DC module, so as to enable them to generate soft and pollution free rays. In this way, this utility model serves as an emergency lamp. In addition, it can also serve as a flashlight after the retractable link rod (2) is pulled out.

The pins of LED beads fall into two categories: ∲3 (with diameter of 3mm) and ∲5 (with diameter of 5mm). 48-288 LED beads can be placed in rows on the lamp board.

The lamp holders fall into five categories: E27, E26, E14, E11 and GU10. The lamp holder can be screwed onto AC receptacles whose rated voltages range from AC85 to 265V

## Claims

1. This Utility Model relates to a type of Rechargeable, Energy-Saving and Multifunctional LED Lamp, whose features can be described as follows:
This Utility Model is made up of: lamp holder (1), retractable link rod (2), housing (3), shade (4), LED bead and fixer (5), PCB (6) and lithium battery (7). In the structure, the retractable link rod (2) is disposed between the lamp holder (1) and the housing (3), and the LED bead and fixer (5) on the top of the housing (3). On the surface of the housing (3) top is the lamp shade (4), at its side are the power switch (8) and indicator (9) and inside it is the PCB (6). The lithium battery (7) is embedded in the retractable link rod (2), and on the PCB (6) are AC-DC Constant-V power module, charging module, DC-DC Constant-I power module and intelligent module.

2. Based on the descriptions on the Rechargeable, Energy-Saving and Multifunctional LED Lamp in Article 1 of the Claims, the product's feature lies in: the body of the LED bead can be configured with ∮3 (3mm in diameter) and ∮5 (5mm in diameter). 48-288 LED beads can be placed in rows on the lamp board.

3. Based on the descriptions on the Rechargeable, Energy-Saving and Multifunctional LED Lamp in Article 1 of the Claims, the product's feature lies in: The lamp holders fall into five categories: E27, E26, E14, E11 and GU10, and the lamp holder can be screwed onto AC receptacles whose rated voltages range from AC85 to 265V
